# EUROPÄISCHE PATENTANMELDUNG

(11) **EP 1 574 684 A1**
(43) Veröffentlichungstag der Anmeldung: **14.09.2005**
(21) Anmeldenummer: 04405145.6
(22) Anmeldetag: 12.03.2004
(51) Int. Cl.: F02B 37/24

(54) **Regelungssystem und Verfahren zum Betreiben eines Abgasturboladers**

(71) Anmelder: ABB Turbo Systems AG, 5400 Baden (CH)
(72) Erfinder: Codan, Ennio, 5212 Hausen bei Brugg (CH)
(74) Vertreter: ABB Patent Attorneys

(57) **Zusammenfassung**

Zum Betreiben des Abgasturboladers bei welchem die Verbrennungsluft über eine Regeleinrichtung (14) ansaugt wird, wobei die Regeleinrichtung (14) drehbare Schaufeln aufweist, die in einem Gehäuse mit minimalem Spiel Kanäle bilden, welche die Luftströmung in einer beliebigen Drallrichtung umlenken und beschleunigen können, wird die Schaufelstellung in Abhängigkeit der Motor- und Turboladerbetriebspunkte geregelt. Für die Regelung werden unterschiedliche, in Abhängigkeit des Motorbetriebsbereichs gewählte Zielgrössen verwendet.

Dank der Wahl unterschiedlicher Regelungszielgrössen, kann der Turbolader in jedem Betriebsbereich des Verbrennungsmotors (1) optimal zu dessen Drehmomentsteigerung beitragen. Kompromisse zwischen Höchstleistung auf der einen und Drehmomentstärke im Anfahr- oder Lehrlaufbetrieb auf der anderen Seite müssen damit nicht mehr eingegangen werden.

## Beschreibung

### Technisches Gebiet

Die Erfindung bezieht sich auf das Gebiet der turboaufgeladenen Verbrennungsmotoren.

Sie betrifft ein Verfahren zum Betreiben eines Abgasturboladers eines Verbrennungsmotors gemäss dem Oberbegriff des Patentanspruchs 1. Sie betrifft ferner eine Regelungsvorrichtung für den Verdichter eines Abgasturboladers zum Aufladen eines Verbrennungsmotors gemäss dem Oberbegriff des Patentanspruchs 6.

### Stand der Technik

Moderne Verbrennungsmotoren haben im Ansaugbereich der Verbrennungsluft einen Abgasturbolader zum Verdichten der Verbrennungsluft vorgeschaltet. Dabei wird das heisse Abgas aus den Zylindern des Verbrennungsmotors auf die Turbine geführt, wo durch Expansion Energie freigesetzt und in mechanische Leistung gewandelt wird, welche über eine Welle zum Antreiben des Verdichters verwendet wird. Im Verdichter wird Frischluft angesaugt, komprimiert und anschliessend mit erhöhtem Druck zur Verbrennung den Zylindern des Verbrennungsmotors zugeführt. Allerdings ist die im unteren Last- und Drehzahlbereich des Verbrennungsmotors zu Verfügung stehende Energie für die Turbine des Turboladers viel zu tief, um mit dem Verdichter einen akzeptablen Ladedruck zu erzeugen. Darum arbeitet der Verbrennungsmotor bis zu einer bestimmten Drehzahl wie ein herkömmlicher, nicht aufgeladener Saugmotor, mit relativ schwachem Drehmoment in den unteren Last- und Drehzahlbereichten.

Dieselmotoren fahren immer ungedrosselt und in einem relativ engen Drehzahlbereich (typischerweise zwischen 800 bis 4000 U/min), deshalb kann der Einsatz der variablen Turbinengeometrie das Problem zum Teil entschärfen.

Bei Ottomotoren hingegen, bei denen die Turboladerdrehzahl bis auf etwa 4% des Nennwerts runterfällt, gelingt es nicht, den Ladedruck mit Regelungen zu erhöhen.

Deshalb gibt es vermehrt Versuche, die Aufladung mit zusätzlicher Energie durch mechanisch oder elektrisch angetriebene Zusatzverdichter zu unterstützen. Alle bisher auf diesem Gebiet vorgestellten Massnahmen sind zwar mehr oder weniger wirksam, jedoch sind sie durchwegs kompliziert und teuer.

Es gibt aber im Motor selbst eine Energiequelle, die bis jetzt ungenutzt geblieben ist: die Drosselklappe. Sie kann in Leerlauf des Motors bis zu 1 kW Leistung vernichten.

Diese potentielle Leistung kann genutzt werden, um die Turboladerdrehzahl zu erhöhnen.

In EP 0 090 122 A2 ist ein Gerät beschrieben, das in Abhängigkeit der Drosselklappenstellung ein Drall am Eintritt des Turboladerverdichters erzeugt, um die Verdichterleistung in Leerlauf des Motors zu reduzieren. Die vorgeschlagene Ausführung mit radialen Schaufeln in einem ringförmigen Raum am Entritt des Verdichters braucht relativ viel Platz und ist nicht geeignet, um eine regelmässige Verteilung der tangentialen Geschwindigkeit am Eintritt der Verdichterschaufeln zu gewähren. Dazu arbeitet das Gerät ohne Rücksicht auf Motorlast und Drehzahl. Das Schnellschliessen der Drosselklappe während des Fahrens mit voller Motorleistung würde zu gefährlichen Überdrehzahlen bis zur Zerstörung des Turboladers führen.

In DE 36 13 857 ist ein Axialdrallregler für Abgasturbolader für Verbrennungsmotoren vorgeschlagen, der ungeeignet ist, sehr grosse Drallwinkel in der Strömung zu erzeugen, da die Schaufeln in geschlossener Stellung keine Abdichtung der Kanäle und keine Überlappung aufweisen.

### Kurze Darstellung der Erfindung

Der Erfindung liegt folglich die Aufgabe zugrunde, eine Regelungsvorrichtung für den Verdichter eines Abgasturboladers und ein Verfahren zum Betreiben dieses Abgasturboladers zu schaffen, mit denen die obengenannte Drehmomentschwäche von Verbrennungsmotoren verbessert werden kann.

Erfindungsgemäss wird diese Aufgabe mit einem Verfahren zum Betreiben eines Abgasturboladers eines Verbrennungsmotors mit den Merkmalen des Patentanspruchs 1, sowie mit einem Abgasturbolader mit den Merkmalen des Patentanspruchs 6 gelöst.

Beim erfindungsgemässen Verfahren zum Betreiben des Abgasturboladers bei welchem die Verbrennungsluft über eine Regeleinrichtung ansaugt wird, wobei die Regeleinrichtung drehbare Schaufeln aufweist, die in einem Gehäuse mit minimalem Spiel Kanäle bilden, welche die Luftströmung in einer beliebigen Drallrichtung umlenken und beschleunigen können, wird die Schaufelstellung in Abhängigkeit der Motor- und
Turboladerbetriebspunkte geregelt, wobei für die Regelung unterschiedliche Zielgrössen verwendet werden, und die für die Regelung verwendeten Zielgrössen in Abhängigkeit des Motorbetriebsbereichs gewählt werden.

Dank der Wahl unterschiedlicher Regelungszielgrössen, kann der Turbolader in jedem Betriebsbereich des Verbrennungsmotors optimal zu dessen Drehmomentsteigerung beitragen. Kompromisse zwischen Höchstleistung auf der einen und Drehmomentstärke im Anfahr- oder Lehrlaufbetrieb auf der anderen Seite müssen damit nicht mehr eingegangen werden.

Weitere Vorteile ergeben sich aus den abhängigen Ansprüchen.

### Kurze Beschreibung der Zeichnungen

Im folgenden ist die Erfindung anhand der Figuren näher erläutert. In allen Figuren sind gleichwirkende Elemente mit gleichen Bezugszeichen versehen. Es zeigen:
- Fig. 1: eine schematische Darstellung eines Verbrennungsmotors mit einem Turbolader und dem erfindungsgemässen Regelungssystem,
- Fig. 2: das Kennfeld des Verbrennungsmotors nach Fig. 1,
- Fig. 3: das Regelungssystem nach Fig. 1 mit Strömungsschaufeln,
- Fig. 4: die Strömungsschaufeln im offenen Zustand des Regelungssystems,
- Fig. 5: die Strömungsschaufeln im geschlossenen Zustand des Regelungssystems,
- Fig. 6: den Verlauf der Turboladerdrehzahl in Abhängigkeit der Motorendrehzahl,
- Fig. 7: das Verdichter-Kennfeld des Turboladers nach Fig. 1, und
- Fig. 8: den Verlauf des Drehmoments des Verbrennungsmotors nach Fig. 1 während eines Lastsprungs.

### Weg zur Ausführung der Erfindung

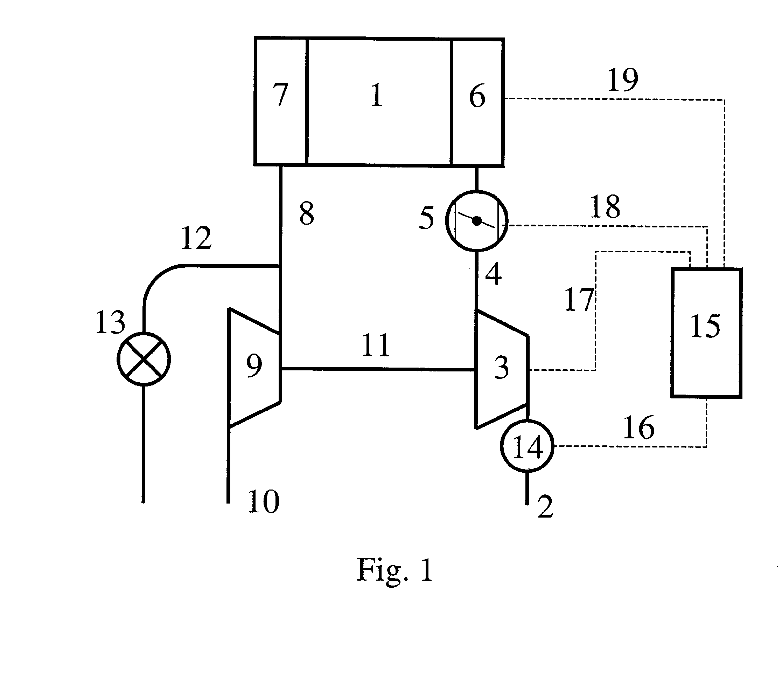

In Fig. 1 ist schematisch ein Verbrennungsmotor 1 abgebildet. Die Luft für die Verbrennung wird durch eine Ansaugleitung 2 in einen Radialverdichter 3 geführt. Die verdichtete Luft strömt in einer Leitung 4, wo sich ein Kühler befinden kann (nicht abgebildet) und wird durch eine Drosselklappe 5 in einen Luftsammler 6 geführt, woraus sie von den Zylindern (nicht abgebildet) angesaugt wird.

Das Abgas aus den Zylindern sammelt sich nach dem Verbrennungsvorgang in einem Leitungssystem (7-8), wird in eine Turbine 9 geführt und verlässt sie durch die Auspuffleitung 10. Die Expansionsenergie wird von der Turbine 9 in mechanische Leistung verwandelt, die durch die Welle 11 den Verdichter 3 antreibt. Von der Leitung 8 zweigt eine Zusatzleitung 12 ab, die durch ein Regelventil (Wastegate) 13 die Turbine 9 umgeht. Damit kann man vermeiden, dass der Luftdruck in der Leitung 4 oder in dem Behälter 6 einen Grenzwert überschreitet.

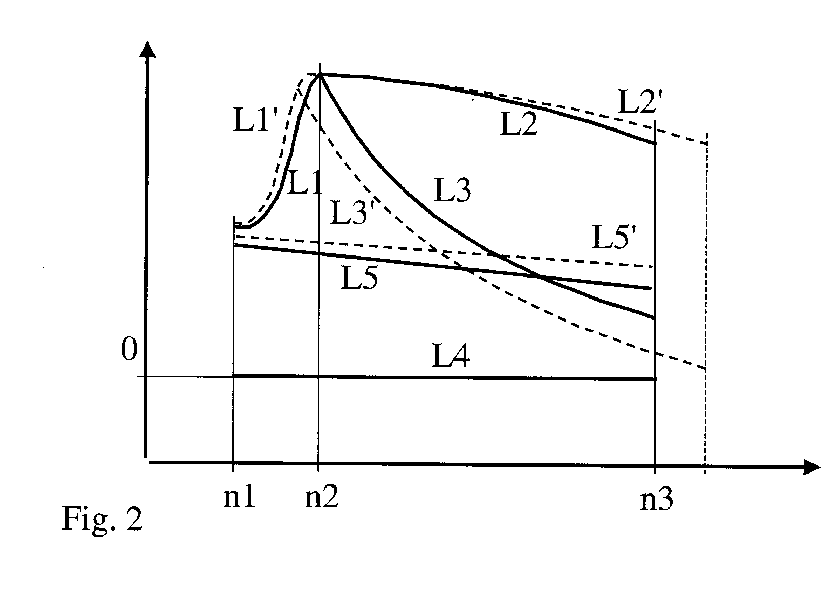

Das Verhalten eines solchen Motors wird im Motorkennfeld in Fig. 2 qualitativ beschrieben. Auf der x-Achse ist die Motordrehzahl, auf der y-Achse das Motordrehmoment dargestellt. Die Linie L1 beschreibt das maximale Drehmoment zwischen der minimalen Drehzahl n1 und der Drehzahl n2, wo der Grenzwert für den Luftdruck erreicht wird. Die Linie L2 beschreibt das maximale Drehmoment in dem Bereich, wo das Regelventil 13 den Ladedruck auf dem Grenzwert nahezu konstant hält. Die Linie L3 entspricht bei der jeweiligen Drehzahl dem Drehmoment, bei welchem sich das Regelventil 13 zu öffnen beginnt. Die Linie L4 stellt den Leerlaufbetrieb dar. Die Linie L5 gibt das Drehmoment des Motors wieder, welches aus dem Leerlauf nach dem Schnellöffnen der Drosselklappe 5 erreicht wird. Das Drehmoment liegt tiefer als bei einem Saugmotor, da im Leerlauf der Verdichter langsam dreht und keinen nennenswerten Überdruck liefern kann. Nach dem öffnen der Drosselklappe spürt der Verdichter zunächst einen erhöhten Volumenstrom, was bei konstanter Drehzahl zu einer weiteren Druckabsenkung führt, wie später näher erläutert werden wird.

Unangenehm für den Fahrer ist, dass die Linie L1 von Drehzahl n2 zu Drehzahl n1 sehr steil abfällt, was die Fahrbarkeit in dem Bereich stark einschränkt und auch die Zeit, die gebraucht wird, um von der Linie L5 auf die Linie L1 bzw. L2 zu kommen, wenn eine schnelle Lasterhöhung erwünscht ist. Diese Zeit ist als Turboloch bekannt und ist bei der Drehzahl n2 am höchsten, wo sie typischerweise bis zu 2 Sekunden beträgt.

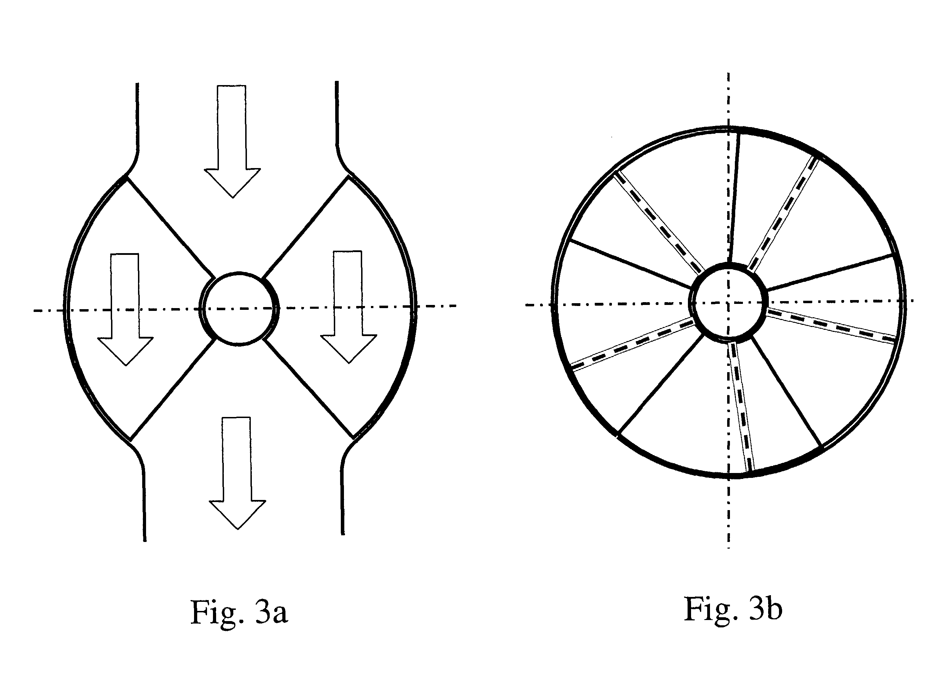

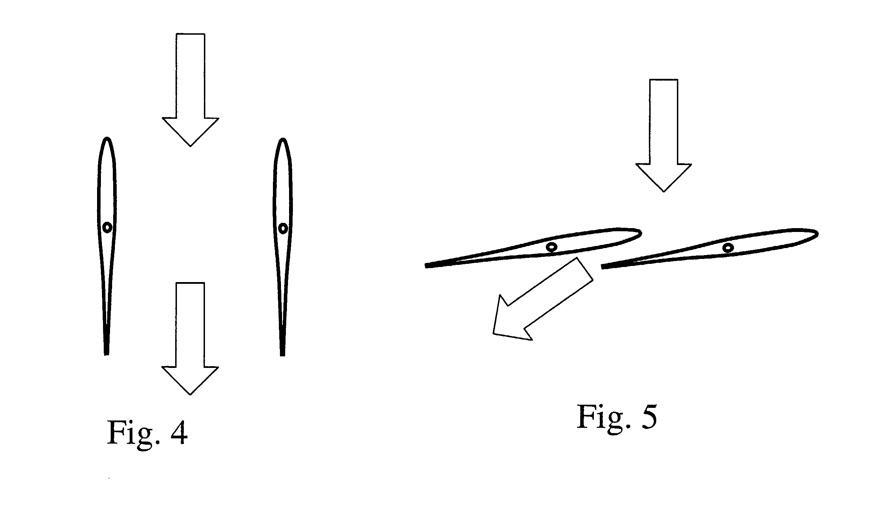

Um diese Situation zu verbessern ist erfindungsgemäss eine Regelungsvorrichtung 14 am Eintritt des Verdichters 3 vorgesehen, die erlaubt die Turboladerdrehzahl zu regeln. Diese Vorrichtung besteht aus einer Reihe drehbarer Schaufeln (Fig. 3), die in offener Stellung einen minimalen Widerstand für die Strömung aufweisen (Fig. 4). In einer weitgehend geschlossenen Stellung müssen die Schaufeln eine Überlappung zeigen (Fig. 5), d.h. der Strömungskanal ist in Strömungsrichtung vollständig durch die Schaufeln abgedeckt. Dank einem minimalen Spiel zu den Wänden, welches keine Leckströmung zulässt, werden zwischen den weitgehend geschlossenen Schaufeln düsenartige Kanäle bilden, welche die Strömung stark in tangentiale Richtung beschleunigen. Damit in jeder Stellung das Spiel zwischen Schaufeln und Wänden sehr klein bleibt, und es keinen Spalt zwischen den Schaufeln und den Wänden gibt, ist es von Vorteil, wenn die Wände im Bereich der Schaufeln kugelförmig gestaltet werden.

Der Abstand zwischen den Vorleitschaufeln und den Verdichterschaufeln soll etwa dem Durchmesser der Ansaugleitung entsprechen. Wird der Abstand zu klein gewählt, können die Verdichterschaufeln durch die Nachläufe der Vorleitschaufein gestört werden; wird der Abstand zu gross gewählt, entstehen ungünstige Veränderungen des Geschwindigkeitsprofils und grössere Reibungsverluste, welche die Wirkung der Vorleitschaufeln vermindern können.

Die Druckdifferenz über die Schaufeln kann in extremen Fällen bis über 0.5 bar steigen, deshalb sollen vorzugsweise die Drehachsen der Schaufeln im Zentrum der Gaskräfte liegen, damit die Verstellkraft minimiert wird. Eine leichte Verschiebung der Drehachsen gegen die Eintrittskante kann auch von Vorteil sein, damit die Schaufeln, beim Ausfallen der Verstellkraft in die neutrale Stellung durch die Gaskräfte gebracht werden.

Die Stellung der Schaufeln wird von der Reglereinheit 15 bestimmt. Diese Reglereinheit muss zumindest Signale von Turboladerdrehzahl 17, von Motorbelastung 18 und von Luftdruck 19 bekommen; die Verarbeitung dieser Signale generiert ein Steuersignal 16 für einen Aktuator (nicht abgebildet), der die Schaufelstellung entsprechend einstellt.

Die Regelungsvorrichtung wird je nach Motorbetrieb in vier verschiedenen Modi betrieben.

### a) Teillast stationär

Wird der Motor stationär unterhalb der Linien L1 und L3 betrieben, werden die Schaufeln so weit geschlossen, bis eine maximale Turboladerdrehzahl nTL oder die für den jeweiligen Betriebspunkt maximal erreichbare Turboladerdrehzahl erreicht wird. Insbesondere in Leerlauf oder bei sehr tiefer Last im Motordrehzahlbereich von n1 bis n2 erfolgt es wie jetzt beschrieben wird. Die Druckdifferenz zwischen der Ansaugleitung 2 und dem Luftbehälter 6 beträgt bis 0.8 bar. Die axiale Geschwindigkeit beträgt hier so wenig wie etwa 30 m/s, deshalb kann man mir einer reinen Umlenkung der Strömung nicht viel Energie umsetzen. Werden die Schaufeln aber sehr weit zugedreht, kann die Strömung bis zum Erreichen einer tangentialen Komponente von über 200 m/s in die Drehrichtung des Verdichters beschleunigt werden. Theoretisch könnte so der Verdichter wie eine Turbine von der Strömung angetrieben werden. Aufgrund der Profilform der Verdichterradschaufeln wird sich in Wirklichkeit jedoch lediglich die Verdichterleistung reduzieren, in Abhängigkeit von der tangentialen Strömung kann sie bis gegen Null gehen. Die Turboladerdrehzahl kann sich unter diesen Bedingungen um Faktor 2 bis 2.5 erhöhen, da die Turbinenleistung bei dieser Drehzahl ebenfalls auf Null zurückfällt.

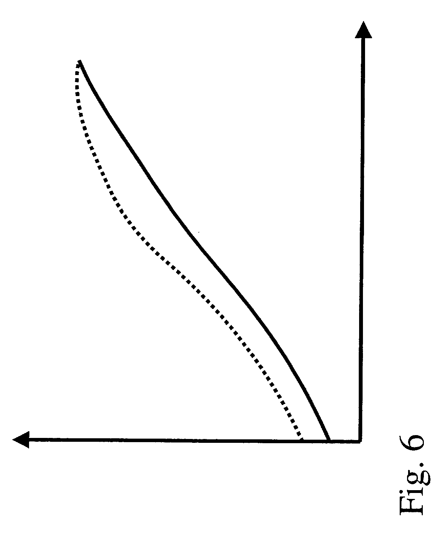

In Fig. 6 ist exemplarisch dargestellt, wie die Turboladerdrehzahl, aufgetragen über dem Motordrehmoment bei der Motordrehzahl n2, von der durchgezogenen auf der gestrichelten Linie verschieben lässt.

### b) Lastsprung

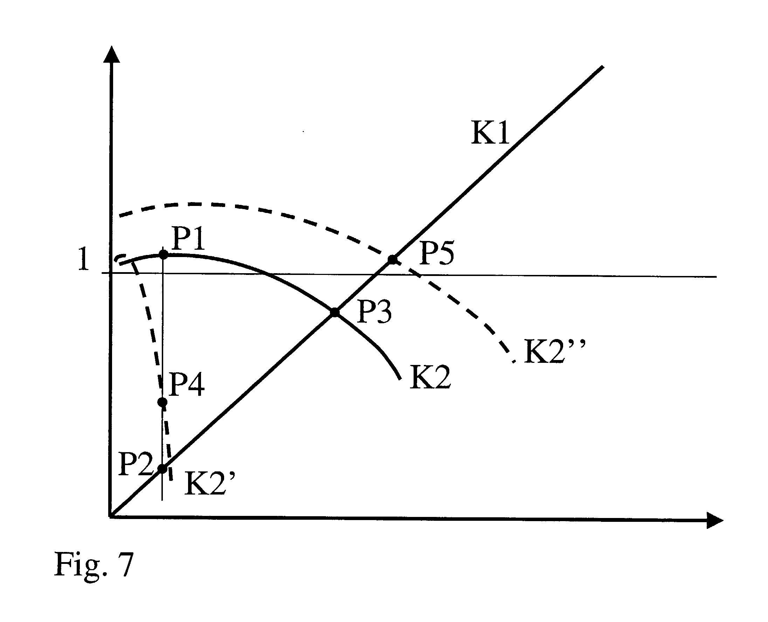

In Fig. 7 ist zunächst der normale Betrieb in einem Verdichterkennfeld dargestellt. Auf der x-Achse findet man hier den normierten Massenstrom durch den Verdichter und auf der y-Achse das Druckverhältnis. Die Linie K1 ist die Schlucklinie des Motors bei konstanter Drehzahl, die Linie K2 ist die Drehzahllinie des Verdichters. Bei dem Ausgangspunkt arbeitet der Verdichter im Punkt P1 mit einem Druck leicht über der Umgebungsdruck, der Motor sieht den Punkt P2, mit einem sehr tiefen Druck. Die Druckdifferenz zwischen P1 und P2 ist von der Drosselklappe gegeben. Wird die Drosselklappe schnell geöffnet, bewegen sich beide Punkte auf dem gemeinsamen Betriebspunkt P3, der wegen der tiefen Verdichterdrehzahl auf einen tieferen Druck als in P1 fällt.

Werden aber die Schaufeln vor dem Verdichtereintritt stark zugedreht, arbeitet der Verdichter bei erhöhter Drehzahl auf der Linie K2' im Punkt P4. Werden die Drosselklappe und die drehbare Schaufeln gleichzeitig aufgedreht, verschiebt sich die Drehzahllinie des Verdichters auf die Linie K2" und der neue Betriebpunkt P5 ergibt einen Ladedruck, der abhängig vom Ausgangspunkt 10 bis 20% höher liegt, als im Punkt P3.

Wenn man die Klappe voll öffnet (durch betätigen des Gaspedals) erwartet man die volle Leistung, obschon der Turbolader erst noch beschleunigt werden muss. Die kürzeste Beschleunigung wird dann erreicht, wenn das Überschussdrehmoment, d.h. die Differenz zwischen dem Drehmoment der Turbine und dem Drehmoment des Verdichters am grössten ist. Die ist dann der Fall, wenn die drehbaren Schaufeln sich noch in einer leicht geschlossenen Stellung befinden. Der Ladedruck ist dabei geringfügig tiefer, d.h. ein kleiner Teil des Motordrehmoments wird zugunsten der Turboladerbeschleunigung geopfert.

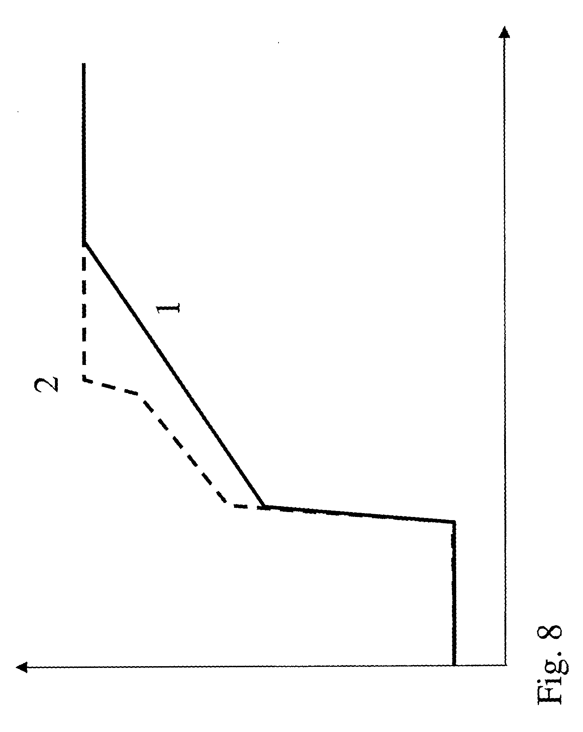

Die Entwicklung des Drehmoments während eines Lastsprungs bei Drehzahl n2 ist in Fig. 8 exemplarisch ohne (durchgezogene Linie) und mit erfindungsgemässer Regelung (gestrichelte Linie) dargestellt. Man merkt, dass das Drehmoment gleich nach dem Öffnen der Klappe höher ist, danach verläuft die Kurve etwas steiler dank des optimierten Überschussmoments des Turboladers. Am Schluss biegt die Linie nochmals nach oben, denn sobald die Solldrehzahl des Turboladers erreicht ist, kann die restliche Erhöhung des Druckverhältnisses allein durch Weiteröffnen der Regelungsschaufeln am Verdichtereintritt erreicht werden. Die Summe der drei obenerwähnten Effekte reduziert stark die Gesamtzeit zum Erreichen des maximalen Drehmoments des Motors.

### c) Stationäre Vollastkurve ohne Wastegate

Wird der Motor stationär oder quasi-stationär auf der Vollastkurve zwischen n1 und n2 betrieben, muss die Schaufelstellung der Regeleinrichtung vor Verdichter zur Erreichung des maximal erreichbaren Druckverhältnisses geregelt werden.

### d) Stationäre Vollastkurve mit Wastegate

Wird der Motor stationär oberhalb der Kurve L3 betrieben, wird der Ladedruck auf den maximalen Wert durch das Regelventil 13 gehalten. Die Regeleinrichtung am Verdichtereintritt kann dann die Turboladerdrehzahl regeln. Man kann damit einerseits vermeiden, dass die Turboladerdrehzahl lebensdauerreduzierende Werte erreicht, andererseits den Einsatzbereich des Motors auf einen breiteren Drehzahlbereich erweitern, denn durch Drehen der Schaufeln zur Erzeugung eines Dralls entgegen der Drehrichtung des Verdichters können der Bereich guten Wirkungsgrades und die Schluckgrenze nach rechts verschoben werden, womit höhere Motordrehzahlen ermöglicht werden. Ist diese Erweiterung des Einsatzbereiches nach rechts unerwünscht, kann man einen Turbolader mit kleinerem Durchsatz wählen, womit die Drehzahl des maximalen Drehmomentes n2 nach links verschoben wird und die Kurve L1 nochmals erhöht wird.

Zusammenfassend werden die Vorteile der Erfindung in Fig. 2 gezeigt:
- Die Kurve L5, d.h. das erreichbare Drehmoment nach dem Schnellöffnen der Drosselklappe, wird auf den gestrichelt dargestellten Verlauf L5' angehoben (Regelmodi a + b).
- Der Bereich, in dem der Turbolader mit der Nenndrehzahl arbeitet, wird bis auf die Kurve L3', unterhalb der Kurve L3 erweitert. In diesem Bereich reagiert der Motor praktisch ohne Verzug auf Laständerungen
- Die Vollastdrehmomentkurve L1 wird auf den gestrichelt dargestellten Verlauf L1' angehoben
- Der Bereich zwischen den Linien L2, L3 und n3 wird wie gestrichelt dargestellt nach rechts erweitert (L2', L3'), ohne Gefahr, dass der Turbolader schlechte Wirkungsgrade oder zu hohe Drehzahlen erreicht.

Die Beschleunigungszeit liegt in der gleichen Grössenordnung, wie dies mit einem elektrisch angetriebenen Zusatzverdichter der Fall wäre. Erreicht wird dies jedoch mit deutlich geringeren Kosten und ohne Zufuhr zusätzlicher Energie, was nur das Bordnetz des Fahrzeuges unnötig belasten würde.

Die Vorteile der erfindungsgemässen Regelung vor Verdichter sind nicht auf Motoren mir Drosselklappe beschränkt. Ein Dieselmotor beispielsweise arbeitet im Leerlauf ungedrosselt mit Luftverhältnissen, die etwa Faktor 2,5 höher sind als nötig. In diesem Betrieb kann durch die erfindungsgemässe Regelung das Druckverhältnis des Verdichters von leicht über 1 auf etwa 0.5 reduziert werden. Dadurch wird die Turboladerdrehzahl wie beim gedrosselten Motor erhöht, was bei einer schnellen Lasterhöhung wiederum für ein höheres instationäres Drehmoment und für die schnellere Turboladerbeschleunigung vorteilhaft ist.

### Bezugszeichenliste

- 1: Verbrennungsmotor
- 2: Ansaugleitung
- 3: Radialverdichter
- 4: Leitung
- 5: Drosselklappe
- 6: Luftsammler
- 7, 8: Leitungssystem
- 9: Turbine
- 10: Auspuffleitung
- 11: Welle
- 12: Ventilleitung
- 13: Regelventil, Wastegate
- 14: Regelungsvorrichtung
- 15: Reglereinheit
- 16: Steuersignal
- 17: Turboladerdrehzahl
- 18: Motorbelastung
- 19: Luftdruck
- K1: Schlucklinie des Verbrennungsmotors
- K2: Drehzahllinie des Verdichters
- L1-L5: Drehmoment des Verbrennungsmotors

## Patentansprüche

1. Verfahren zum Betreiben eines Abgasturboladers eines Verbrennungsmotors (1), dessen Abgase in eine Turbine (9) geführt werden und durch Expansion Leistung zum Antrieb eines Verdichters (3) produzieren, der die Verbrennungsluft über eine Regelungsvorrichtung (14) ansaugt und komprimiert dem Motor liefert, wobei die Regelungsvorrichtung drehbare Schaufeln aufweist, die in einem Gehäuse mit minimalem Spiel Kanäle bilden, welche die Luftströmung in einer beliebigen Drallrichtung umlenken und beschleunigen können
**dadurch gekennzeichnet, dass**
die Schaufelstellung in Abhängigkeit der Motor- und/ oder Turboladerbetriebspunkte geregelt wird, wobei für die Regelung unterschiedliche Zielgrössen (17, 19) verwendet werden, und die für die Regelung verwendeten Zielgrössen in Abhängigkeit des Motorbetriebsbereichs gewählt werden.

2. Regelungsverfahren nach Anspruch 1, **dadurch gekennzeichnet, dass** im stationären Teillastbetrieb des Motors Zielgrösse der Regelung die maximale Turboladerdrehzahl (17) ist.

3. Regelungsverfahren nach Anspruch 1, **dadurch gekennzeichnet, dass** während einer Motorlasterhöhung Zielgrösse der Regelung die maximale Turboladerbeschleunigung ist.

4. Regelungsverfahren nach Anspruch 1, **dadurch gekennzeichnet, dass** im stationären Vollastbetrieb des Motors unterhalb des maximalen Ladedrucks Zielgrösse der Regelung der maximale Ladedruck (19) ist.

5. Regelungsverfahren nach Anspruch 1, **dadurch gekennzeichnet, dass** im stationären Vollastbetrieb des Motors mit maximalem Ladedruck Zielgrösse der Regelung eine vorgegebene Turboladerdrehzahl (17) ist.

6. Verdichter-Regelungsvorrichtung, mit einem Strömungskanal und mit in dem Strömungskanal drehbar angeordneten Schaufeln zum Umlenken und Beschleunigen einer Luftströmung, **dadurch gekennzeichnet, dass**
die Schaufeln spaltlos zwischen einer inneren und einer äusseren Wand des Strömungskanals angeordnet sind, und dass
die Schaufeln derart ausgebildet und drehbar angeordnet sind, dass die Schaufeln in einem geschlossenen Zustand der Regelungsvorrichtung den Querschnitt des Strömungskanals in Durchlaufrichtung vollständig überdecken.

7. Verdichter-Regelungsvorrichtung nach Anspruch 6, **dadurch gekennzeichnet, dass** die Schaufeln im geschlossenen Zustand der Regelungsvorrichtung überlappend angeordnet sind.

8. Abgasturbolader zum Aufladen eines Verbrennungsmotors, mit einer durch die Abgase des Verbrennungsmotors antreibbaren Turbine (9) und einem über eine Welle (11) mit der Turbine verbundenen Verdichter (3) zum Ansaugen und Komprimieren von Verbrennungsluft, wobei dem Verdichter eine Regelungsvorrichtung (14) vorgeschaltet ist, welche in einem Strömungskanal drehbare Schaufeln zum Umlenken und Beschleunigen einer Luftströmung aufweist,
**dadurch gekennzeichnet, dass**
die Schaufeln spaltlos zwischen einer inneren und einer äusseren Wand des Strömungskanals angeordnet sind, und dass
die Schaufeln derart ausgebildet und drehbar angeordnet sind, dass die Schaufeln in einem geschlossenen Zustand der Regelungsvorrichtung den Querschnitt des Strömungskanals in Durchlaufrichtung vollständig überdecken.
